# EUROPEAN PATENT APPLICATION

(11) **EP 4 851 219 A1**
(43) Date of publication of application: **09.12.2026**
(21) Application number: 25748689.4
(22) Date of filing: 29.01.2025
(51) Int. Cl.: C08G 63/553, C08F 283/01

(54) **ROSIN-MODIFIED UNSATURATED POLYESTER, ROSIN-MODIFIED UNSATURATED POLYESTER COMPOSITION, AND MOLDED BODY**

(30) Priority: 30.01.2024 JP 2024011972
(71) Applicant: Lawter, Inc., Elgin, IL 60124 (US)
(72) Inventor: OKAWACHI, Keijiro, 9130 Kallo (BE); MATSUSHIMA, Hironori, 9130 Kallo (BE)
(74) Representative: Ter Meer und Partner mbB
(86) International application number: PCT/JP2025/002871
(87) International publication number: WO 2025/164686

(57) **Abstract**

An object of the present invention is to provide a rosin-modified unsaturated polyester capable of forming a cured product excellent in terms of both surface hardness and water resistance. The rosin-modified unsaturated polyester of the present invention is characterized in that a methanol tolerance at 25°C is 100 g or less. As the rosin-modified unsaturated polyester, a polycondensation product of raw material compounds including carboxylic acids (X) including rosins (a) and α,β-unsaturated dicarboxylic acids (b), and a polyol (Y) is suitably used. According to the present invention, a rosin-modified unsaturated polyester capable of forming a cured product excellent in terms of both surface hardness and water resistance can be provided.

## Description

### Technical Field

The present invention relates to a rosin-modified unsaturated polyester, a rosin-modified unsaturated polyester composition, and a molded article.

### Background of the invention

Conventionally, cured products of unsaturated polyester compositions have been widely used as molded articles in various applications such as buildings, automobiles, aircraft, ships, and electronic equipment because of their excellent moldability and appearance.

In recent years, because of the consideration being given to environmental issues, demand for fiber-reinforced plastics (FRP) that are excellent in terms of lightweightness and mechanical strength has increased in the fields of, for example, ship hulls, bathtubs, construction materials, industrial materials, and the like. In the fiber-reinforced plastics, unsaturated polyester compositions are used as binders for integrating reinforcing fibers together. The production of fiber-reinforced plastics is performed by impregnating reinforcing fibers with an unsaturated polyester composition and curing the impregnated polyester composition.

The unsaturated polyester composition includes an unsaturated polyester, a radically polymerizable monomer, and, as necessary, a polymerization initiator or a curing agent. The unsaturated polyester can generally be obtained by carrying out polycondensation of a carboxylic acid including an α,β-unsaturated dicarboxylic acid with a polyol. The unsaturated polyester composition can be cured by copolymerizing the unsaturated polyester and the radically polymerizable monomer, and a molded article can thereby be obtained.

Patent Literature 1 discloses an unsaturated polyester composition including an unsaturated polyester and a polymerizable monomer. The foregoing unsaturated polyester is composed of an acid component including an aromatic dicarboxylic acid, a monocarboxylic acid and an unsaturated dicarboxylic acid, and an alcohol component including a trihydric or higher polyhydric alcohol and a dihydric alcohol. As the monocarboxylic acid, a rosin-based compound and a biomass-derived aliphatic monocarboxylic acid having 4 to 36 carbon atoms are used.

### Citation List

### Patent Literature

PTL 1: Japanese Patent Application Laid-Open No. 2010-235777

### Summary of Invention

### Technical Problem

However, conventional unsaturated polyester compositions do not have sufficient surface hardness and water resistance after curing, and further improvements are desired.

In view of the above-mentioned circumstances, an object of the present invention is to provide a rosin-modified unsaturated polyester capable of forming a cured product excellent in terms of both surface hardness and water resistance. A further object of the present invention is to provide a rosin-modified unsaturated polyester composition including the above-mentioned rosin-modified unsaturated polyester and a molded article thereof.

### Solution To Problem

The present inventors have conducted various studies in view of the above-mentioned problems and have found that the above-mentioned problems can be solved by the following rosin-modified unsaturated polyester.

The present invention has the following embodiments.
[1] A rosin-modified unsaturated polyester in which a methanol tolerance at 25°C is 100 g or less.
[2] The rosin-modified unsaturated polyester according to the above-mentioned [1], in which the softening point is 60°C or higher.
[3] The rosin-modified unsaturated polyester according to the above-mentioned [1] or [2], which is a polycondensation product of raw material compounds including carboxylic acids (X) including rosins (a) and α,β-unsaturated dicarboxylic acids (b), and a polyol (Y).
[4] The rosin-modified unsaturated polyester according to the above-mentioned [3], in which the rosins (a) include at least one of disproportionated rosin and hydrogenated rosin.
[5] The rosin-modified unsaturated polyester according to the above-mentioned [3] or [4], in which the polyol (Y) includes a trihydric or higher polyol (d).
[6] A rosin-modified unsaturated polyester composition including the rosin-modified unsaturated polyester according to any one of the above-mentioned [1] to [5] and a polymerization inhibitor.
[7] A rosin-modified unsaturated polyester composition including the rosin-modified unsaturated polyester according to any one of the above-mentioned [1] to [5] and a radically polymerizable monomer.
[8] The rosin-modified unsaturated polyester composition according to the above-mentioned [7], in which the radically polymerizable monomer includes at least one of styrene and methylstyrene.
[9] A molded article including a cured product of the rosin-modified unsaturated polyester composition according to the above-mentioned [7] or [8].

### Advantageous Effects of Invention

According to the present invention, a rosin-modified unsaturated polyester capable of forming a cured product excellent in terms of both surface hardness and water resistance can be provided. The cured product described above is suitably used as a molded article that has been molded into a desired form.

### Description Of Embodiments

### <Rosin-modified unsaturated polyester>

The present invention relates to a rosin-modified unsaturated polyester. The rosin-modified unsaturated polyester is characterized in that the methanol tolerance at 25°C is preferably 100 g or less.

The rosin-modified unsaturated polyester of the present invention is modified using rosins (a) as a raw material compound, and this modification allows for an improvement in the surface hardness after curing. However, the mere use of rosins (a) not only fails to sufficiently improve the surface hardness after curing, but also may lead to reduced water resistance.

Considering these circumstances, the present inventors conducted intensive studies, and as a result, found that a cured product excellent in terms of both surface hardness and water resistance can be formed by controlling the methanol tolerance thereof to 100 g or less in a rosin-modified unsaturated polyester modified with rosins (a).

In the present invention, as will be described later, the "methanol tolerance" is determined by measuring the amount of methanol added required until the rosin-modified unsaturated polyester precipitates and causes a white turbid appearance. Herein, the methanol is added dropwise as a poor solvent to a reference solution of the rosin-modified unsaturated polyester, which is dissolved in toluene. The more hydrophilic polar groups, such as carboxy groups and hydroxyl groups, the rosin-modified unsaturated polyester contains, the greater the polarity of the rosin-modified unsaturated polyester becomes. Accordingly, the greater the polarity, the less likely the rosin-modified unsaturated polyester is to precipitate in the reference solution to which methanol has been added dropwise, and the greater the methanol tolerance tends to be. Therefore, the methanol tolerance can be used as an index for the degree of esterification of the rosin-modified unsaturated polyester.

The methanol tolerance set to 100 g or less allows the carboxy group of the carboxylic acid component including the rosins (a) constituting the rosin-modified unsaturated polyester and the hydroxyl group possessed by the polyol component to be sufficiently esterified, and thus allows for an increase in the degree of esterification. By using the rosin-modified unsaturated polyester that has been modified by the rosins (a) and has a higher degree of esterification due to the methanol tolerance being set to 100 g or less, it is possible to provide a rosin-modified unsaturated polyester composition capable of forming a cured product excellent in terms of both surface hardness and water resistance. The cured product described above is suitably used as a molded article that has been molded into a desired form.

The methanol tolerance of the rosin-modified unsaturated polyester at 25°C is preferably 100 g or less, more preferably 80 g or less, more preferably 75 g or less, more preferably 70 g or less, more preferably 60 g or less, and more preferably 45 g or less.

The methanol tolerance of the rosin-modified unsaturated polyester at 25°C is preferably 25 g or more. The methanol tolerance set to 25 g or more allows for improvement in the oil resistance (oil repellency) of the rosin-modified unsaturated polyester so as to reduce the penetration of oil into the cured product of the rosin-modified unsaturated polyester.

The methanol tolerance of the rosin-modified unsaturated polyester at 25°C can be measured according to the following procedure. First, 5 g of the rosin-modified unsaturated polyester is dissolved in 50 mL of toluene in a transparent glass Erlenmeyer flask (volume: 100 mL, preferably in accordance with JIS R3503 (1994)) to obtain a reference solution. While stirring the reference solution at 25°C, methanol is added dropwise to the reference solution, and the mass (g) of methanol added until a white turbid appearance occurs in the reference solution is determined. This mass (g) of methanol is defined as the methanol tolerance of the rosin-modified unsaturated polyester at 25°C. The "occurrence of a white turbid appearance in the reference solution" is determined at the point when characters (10 points) printed on a newspaper become invisible, when viewed through the reference solution in the Erlenmeyer flask, because of the white turbid appearance of the reference solution, with the Erlenmeyer flask placed on and in contact with the newspaper.

The softening point of the rosin-modified unsaturated polyester is preferably 50°C or higher, more preferably 55°C or higher, more preferably 60°C or higher, and more preferably 81°C or higher. The softening point of the rosin-modified unsaturated polyester is more preferably 130°C or lower. The softening point of the rosin-modified unsaturated polyester set to 50°C or higher allows the rosin-modified unsaturated polyester to exhibit higher surface hardness after curing. The softening point of the rosin-modified unsaturated polyester set to 130°C or lower allows for improvement in the solubility of the rosin-modified unsaturated polyester when the solvent is a radically polymerizable monomer in the rosin-modified unsaturated polyester composition.

The softening point of the rosin-modified unsaturated polyester is the same as that measured in accordance with ASTM D6090 (1997). For the above-mentioned measurement, for example, a measuring apparatus, product name "Dropping Point System DP70" manufactured by Mettler Toledo, or the like can be used. When the above-mentioned measuring apparatus is used, for example, the softening point can be measured as follows. First, a stainless steel cup having an upper portion with a diameter of 10 mm, a hole with a diameter of 6.35 mm at a bottom portion thereof, and a depth of 10 mm is filled with a rosin-modified unsaturated polyester and set in the above-described measuring apparatus, after which the temperature is increased from 40°C at a rate of 3°C/min. When the rosin-modified unsaturated polyester is detected by a detector installed at a position 19 mm vertically below the hole in the bottom of the cup, the temperature is measured. The measured temperature can be defined as a softening point.

The rosin-modified unsaturated polyester is preferably a polycondensation product (reaction product) of raw material compounds including carboxylic acids (X) including the rosins (a) and α,β-unsaturated dicarboxylic acids (b), and a polyol (Y). The rosin-modified unsaturated polyester is obtained by esterifying a carboxy group possessed by the carboxylic acids (X) with a hydroxyl group possessed by the polyol (Y). Hereinafter, the raw material compounds constituting the rosin-modified unsaturated polyester will be described sequentially.

### [Carboxylic acids (X)]

The raw material compounds constituting the rosin-modified unsaturated polyester include carboxylic acids (X). The carboxylic acids (X) preferably include rosins (a) and α,β-unsaturated dicarboxylic acids (b).

### (Rosins (a))

Examples of the rosins (a) include unmodified rosin (non-modified rosin) and modified rosin (rosin derivatives). The rosins (a) may be used singly, or two or more types thereof may be used in combination.

Examples of the unmodified rosin include natural rosin such as gum rosin, tall oil rosin, and wood rosin; and purified rosin obtained by purifying natural rosins. As the natural rosin, gum rosin is preferable. The purified rosin is obtained by purifying natural rosin using known purification means such as a distillation method, an extraction method, a recrystallization method, an adsorption method, or the like. The unmodified rosin may be used singly, or two or more types thereof may be used in combination.

The natural rosin is a natural resin containing a resin acid as a main component. The natural rosin contains a resin acid having conjugated double bonds. The natural rosin may also contain a resin acid having no conjugated double bond. Examples of the resin acid having conjugated double bonds include abietic acid, palustric acid, neoabietic acid, and levopimaric acid. Examples of the resin acid having no conjugated double bonds include dehydroabietic acid, dihydroabietic acid, and tetrahydroabietic acid. Each of the resin acid having conjugated double bonds and the resin acid having no conjugated double bonds may be used singly, or two or more types thereof may be used in combination.

The modified rosin is a modified product of the above-described unmodified rosin. Examples of the modified rosin include acid-modified rosin and stabilized rosin.

The acid-modified rosin is obtained, for example, by adding an α,β-unsaturated carboxylic acid to unmodified rosin by a Diels-Alder reaction or the like. Examples of the α,β-unsaturated carboxylic acid include an α,β-unsaturated carboxylic acid and an anhydride thereof. Specific examples thereof include fumaric acid, maleic acid, maleic anhydride, itaconic acid, citraconic acid, citraconic anhydride, acrylic acid, and methacrylic acid. The α,β-unsaturated carboxylic acids may be used singly, or two or more types thereof may be used in combination.

The stabilized rosin is a rosin-modified product obtained by subjecting unmodified rosin to a stabilization treatment. The stabilization treatment is performed to reduce or eliminate the conjugated double bonds of the above-mentioned resin acid having conjugated double bonds. Examples of the stabilization treatment include a hydrogenation treatment, a disproportionation treatment, and a polymerization treatment.

Accordingly, examples of the stabilized rosin include hydrogenated rosin, disproportionated rosin, and polymerized rosin. The stabilized rosins may be used singly, or two or more types thereof may be used in combination.

The hydrogenated rosin is obtained, for example, by hydrogenating unmodified rosin in the presence of a hydrogenation catalyst. The hydrogenated rosin is also obtained by hydrogenating polymerized rosin. The disproportionated rosin is obtained, for example, by disproportionating unmodified rosin in the presence of a disproportionation catalyst. The polymerized rosin is a polymer of unmodified rosin. The polymerized rosin is obtained by polymerizing unmodified rosin in the presence of a multimerization catalyst.

As the rosins (a), modified rosin is preferable. Hydrogenated rosin and disproportionated rosin are preferable, and disproportionated rosin is more preferable. This can provide a rosin-modified unsaturated polyester having a sufficient amount of unsaturated bonds copolymerizable with a radically polymerizable monomer, which will be described later, and the rosin-modified unsaturated polyester can exhibit higher surface hardness and water resistance after curing.

For example, when the α,β-unsaturated dicarboxylic acids (b) are used as the carboxylic acids (X) to sufficiently incorporate unsaturated bonds into the rosin-modified unsaturated polyester, the α,β-unsaturated dicarboxylic acids (b) may be added to the rosins (a) by a Diels-Alder reaction, and the unsaturated bonds possessed by the α,β-unsaturated dicarboxylic acids (b) may disappear. As a result, the chance of copolymerization between the rosin-modified unsaturated polyester and the radically polymerizable monomer may be reduced, and the surface hardness of the cured product of the rosin-modified unsaturated polyester composition including the rosin-modified unsaturated polyester may become insufficient. However, use of modified rosin as the rosins (a) can reduce the occurrence of the Diels-Alder reaction described above and decreases the loss of unsaturated bonds possessed by the α,β-unsaturated dicarboxylic acids (b). Therefore, the double bonds derived from the α,β-unsaturated dicarboxylic acids (b) can be retained in the rosin-modified unsaturated polyester. This allows the rosin-modified unsaturated polyester to more reliably copolymerize with the radically polymerizable monomer, which may lead to improving the surface hardness after curing.

The content of the modified rosin in the rosins (a) is preferably 90% by mass or more, more preferably 95% by mass or more, more preferably 98% by mass or more, and particularly preferably 100% by mass.

The content ratio of the rosins (a) in the raw material compounds is preferably 20 parts by mass or more, more preferably 30 parts by mass or more, more preferably 40 parts by mass or more, and more preferably 50 parts by mass or more, relative to the total amount of 100 parts by mass of the carboxylic acids (X) and the polyol (Y). The content ratio of the rosins (a) in the raw material compounds is preferably 70 parts by mass or less, and more preferably 65 parts by mass or less, relative to the total amount of 100 parts by mass of the carboxylic acids (X) and the polyol (Y). A content ratio of the rosins (a) of 20 parts by mass or more allows the rosin-modified unsaturated polyester to exhibit higher surface hardness and water resistance after curing. A content ratio of the rosins (a) of 70 parts by mass or less allows for the use of a sufficient amount of the raw material compounds other than the rosins (a).

Furthermore, as described below, metal atoms may be contained in the rosins (a) as inevitable impurities. However, the content ratio of the rosins (a) of 70 parts by mass or less can prevent an unintended increase in the metal atom content during the production of the rosin-modified unsaturated polyester.

(α,β-Unsaturated dicarboxylic acids (b)) The raw material compounds constituting the rosin-modified unsaturated polyester include carboxylic acids (X). The carboxylic acids (X) preferably include the α,β-unsaturated dicarboxylic acids (b) in addition to the rosins (a) described above. Use of the α,β-unsaturated dicarboxylic acids (b) allows for incorporation of a sufficient amount of unsaturated bonds into the rosin-modified unsaturated polyester.

Examples of the α,β-unsaturated dicarboxylic acids (b) include an α,β-unsaturated dicarboxylic acid and an anhydride thereof. The α,β-unsaturated dicarboxylic acid preferably means a chain dicarboxylic acid having two carboxy groups in one molecule and having an unsaturated bond between the α-position carbon and the β-position carbon of at least one carboxy group.

Examples of the α,β-unsaturated dicarboxylic acids (b) include an α,β-unsaturated dicarboxylic acid and an anhydride thereof, and are preferably an α,β-unsaturated aliphatic dicarboxylic acid and an anhydride thereof. Specific examples thereof include fumaric acid, itaconic acid, maleic acid, mesaconic acid, citraconic acid, glutaconic acid, and anhydrides of these. Among these, fumaric acid, maleic acid, and anhydrides of these are preferable. Maleic acid and maleic anhydride are more preferable, and maleic anhydride is more preferable. The α,β-unsaturated dicarboxylic acids (b) may be used singly, or two or more of them may be used in combination.

The content ratio of the α,β-unsaturated dicarboxylic acids (b) in the raw material compounds is preferably 5 parts by mass or more, more preferably 7 parts by mass or more, and more preferably 10 parts by mass or more, relative to the total amount of 100 parts by mass of the carboxylic acids (X) and the polyol (Y). The content ratio of the α,β-unsaturated dicarboxylic acids (b) in the raw material compounds is preferably 50 parts by mass or less, more preferably 40 parts by mass or less, more preferably 30 parts by mass or less, more preferably 20 parts by mass or less, and more preferably 18 parts by mass or less, relative to the total amount of 100 parts by mass of the carboxylic acids (X) and the polyol (Y). A content ratio of the α,β-unsaturated dicarboxylic acids (b) of 5 parts by mass or more allows for incorporation of a sufficient amount of unsaturated bonds into the rosin-modified unsaturated polyester. Thus, the rosin-modified unsaturated polyester composition including the rosin-modified unsaturated polyester can exhibit higher surface hardness and water resistance after curing. On the other hand, with an increase in the content ratio of the rosins (a), polymerization of the α,β-unsaturated dicarboxylic acids (b) with each other may occur, and the rosin-modified unsaturated polyester may gelate as a result. In order to suppress such gelation, it is preferable that the content ratio of the α,β-unsaturated dicarboxylic acids (b) be 50 parts by mass or less.

As will be described later, the rosins (a) may contain metal atoms as inevitable impurities. However, when the rosins (a) are contained in a high content ratio such as 50 parts by mass or more relative to the total amount of 100 parts by mass of the carboxylic acids (X) and the polyol (Y), the content ratio of the α,β-unsaturated dicarboxylic acids (b) in the raw material compounds is preferably 15 parts by mass or less relative to the total amount of 100 parts by mass of the carboxylic acids (X) and the polyol (Y). Such a content can reduce the occurrence of gelation of the rosin-modified unsaturated polyester, this gelation being due to the metal atoms serving as a polymerization catalyst for promoting polymerization of the α,β-unsaturated dicarboxylic acids (b) with each other in a second esterification step described later.

### (Other carboxylic acids (c))

The raw material compounds constituting the rosin-modified unsaturated polyester include carboxylic acids (X). The carboxylic acids (X) preferably further include other carboxylic acids (c) in addition to the above-mentioned rosins (a) and α,β-unsaturated dicarboxylic acids (b). Note that the rosins (a) and the α,β-unsaturated dicarboxylic acids (b) are excluded from the above-mentioned other carboxylic acids (c).

Examples of the other carboxylic acids (c) include monocarboxylic acids (c1) and polycarboxylic acids (c2). The other carboxylic acids (c) may be used singly, or two or more types thereof may be used in combination. The rosins (a) are excluded from the monocarboxylic acids (c1). The rosins (a) and the α,β-unsaturated dicarboxylic acids (b) are excluded from the polycarboxylic acids (c2).

Examples of the monocarboxylic acids (c1) include aliphatic monocarboxylic acids such as acetic acid, propionic acid, butyric acid, valeric acid, caproic acid, lauric acid, stearic acid, 2-ethylhexanoic acid, cyclohexanoic acid, and anhydrides of these; and aromatic monocarboxylic acids such as benzoic acid, methylbenzoic acid, p-t-butylbenzoic acid, orthobenzoylbenzoic acid, naphthoic acid, and anhydrides of these. Among these, aliphatic monocarboxylic acids and aromatic monocarboxylic acids are preferable, and stearic acid, p-t-butylbenzoic acid, and benzoic acid are more preferable. Aromatic monocarboxylic acids are preferable, and p-t-butylbenzoic acid and benzoic acid are more preferable. The monocarboxylic acids (c1) may be used singly, or two or more types thereof may be used in combination.

The polycarboxylic acids (c2) are preferably polycarboxylic acids containing no linear unsaturated hydrocarbon chains, and anhydrides thereof.

Examples of the polycarboxylic acids (c2) include:
chain saturated aliphatic dicarboxylic acids such as oxalic acid, malonic acid, succinic acid, glutaric acid, adipic acid, suberic acid, azelaic acid, sebacic acid, dodecanedioic acid, tetradecanedioic acid, hexadecanedioic acid, oxaloacetic acid, methylmalonic acid, dimethylmalonic acid, methylsuccinic acid, 2,2-dimethylsuccinic acid, methylglutaric acid, dimethylglutaric acid, 1,3-acetonedicarboxylic acid, ketoglutaric acid, 2-oxoadipic acid, 4-oxoheptanedioic acid, 5-oxoazelaic acid, and anhydrides of these;
cyclic aliphatic dicarboxylic acids such as tetrahydrophthalic acid, cyclopropane-1,1-dicarboxylic acid, cyclobutane-1,1-dicarboxylic acid, cyclohexane-1,1-dicarboxylic acid, cyclohexanedicarboxylic acid, and anhydrides of these;
aromatic dicarboxylic acids such as phthalic acid, isophthalic acid, terephthalic acid, phenylenedioxydiacetic acid, indane-2,2-dicarboxylic acid, naphthalene-2,6-dicarboxylic acid, naphthalene-2,7-dicarboxylic acid, and anhydrides of these; and
aromatic tricarboxylic acids or aromatic tetracarboxylic acids such as trimellitic acid, pyromellitic acid, and anhydrides of these.

Examples of the more preferable polycarboxylic acids (c2) include isophthalic acid, adipic acid, tetrahydrophthalic acid, and anhydrides of these, and more preferably adipic acid, tetrahydrophthalic acid, and anhydrides of these. The polycarboxylic acids (c2) may be used singly, or two or more types thereof may be used in combination.

The other carboxylic acids (c) may include only the monocarboxylic acids (c1) among the monocarboxylic acids (c1) and the polycarboxylic acids (c2). Alternatively, the other carboxylic acids (c) may include both the monocarboxylic acids (c1) and the polycarboxylic acids (c2).

### [Polyol (Y)]

The raw material compounds constituting the rosin-modified unsaturated polyester preferably include the polyol (Y). The polyol (Y) is a polyhydric alcohol having two or more hydroxyl groups in one molecule.

Examples of the polyol (Y) include a trihydric or higher polyol (d) and a diol (e). The polyol (Y) preferably includes at least the trihydric or higher polyol (d). For example, the polyol (Y) may include only the trihydric or higher polyol (d), or may include a combination of the trihydric or higher polyol (d) and the diol (e).

### (Polyol (d))

The polyol (Y) preferably includes the trihydric or higher polyol (d). The polyol (d) is a polyhydric alcohol having three or more hydroxyl groups in one molecule. Use of the trihydric or higher polyol (d) allows for an increase in the amount of rosins (a) to be incorporated into the molecule of the rosin-modified unsaturated polyester, and thus, the rosin-modified unsaturated polyester can exhibit higher surface hardness and water resistance after curing.

Examples of the trihydric or higher polyol (d) include trihydric polyols such as glycerin, 1,1,1-trimethylolethane, 1,1,1-trimethylolpropane (also referred to simply as "trimethylolpropane"), trioxyisobutane, 1,2,3-butanetriol, 1,2,3-pentanetriol, 2,3,4-pentanetriol, and 1,2,5-hexanetriol; tetrahydric polyols such as pentaerythritol; pentahydric or higher polyols such as dipentaerythritol, glucose, sucrose, and sorbitol; and alkylene oxide (ethylene oxide, propylene oxide, etc.) adducts of these. The trihydric or higher polyol (d) may be used singly, or two or more types thereof may be used in combination.

Examples of the preferable trihydric or higher polyol (d) include a trihydric polyol and a tetrahydric polyol from the viewpoint of reactivity. Examples of the preferable trihydric polyol include glycerin and trimethylolpropane, and glycerin is more preferable. As the tetrahydric polyol pentaerythritol is preferable.

The trihydric or higher polyol (d) preferably includes a trihydric polyol, more preferably includes a trihydric polyol and a tetrahydric polyol. Thus, the amount of the hydroxyl groups to be used for the esterification reaction can be increased, and the amount of the rosins (a) to be incorporated into the structure of the rosin-modified unsaturated polyester can be increased.

The fact that the trihydric or higher polyol (d) includes both a trihydric polyol and a tetrahydric polyol allows the content ratio of the rosins (a) to be set to a high value, preferably 50 parts by mass or more, relative to the total amount of 100 parts by mass of the carboxylic acids (X) and the polyol (Y). As a result, the rosin-modified unsaturated polyester can exhibit higher surface hardness and water resistance after curing.

The content ratio of the trihydric or higher polyol (d) in the raw material compounds is preferably 5 parts by mass or more, and more preferably 10 parts by mass or more, relative to the total amount of 100 parts by mass of the carboxylic acids (X) and the polyol (Y). The content ratio of the trihydric or higher polyol (d) in the raw material compounds is preferably 30 parts by mass or less, and more preferably 20 parts by mass or less, relative to the total amount of 100 parts by mass of the carboxylic acids (X) and the polyol (Y).

### (Diol (e))

The polyol (Y) preferably further includes a diol (e). The diol (e) is a polyhydric alcohol (dihydric polyol) having two hydroxyl groups in one molecule. Use of the diol (e) allows for sufficient esterification of the carboxy groups possessed by the carboxylic acids (X), so that the amount of excess carboxy groups not subjected to the esterification reaction can be reduced, which may lead to lowering the methanol tolerance of the rosin-modified unsaturated polyester.

Examples of the diol (e) include methylene glycol, ethylene glycol, 1,2-propanediol, 1,3-propanediol, 1,3-butanediol, 1,4-butanediol, neopentyl glycol, 1,5-pentanediol, 1,6-hexanediol, 1,8-octanediol, 1,10-decanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, bisphenol A, bisphenol F, and alkylene oxide (ethylene oxide, propylene oxide, etc.) adducts of these. The diol (e) may be used singly, or two or more types thereof may be used in combination.

The carbon number of the diol (e) is preferably 6 or less, and more preferably 4 or less. The carbon number of the diol (e) is preferably 1 or more, and more preferably 2 or more. The diol (e) having a smaller carbon number can improve the softening point of the rosin-modified unsaturated polyester. As a result, the rosin-modified unsaturated polyester can exhibit higher surface hardness after curing.

Examples of the preferable diol (e) include 1,2-propanediol, 1,3-propanediol, 1,6-hexanediol, and neopentyl glycol, and more preferably 1,3-propanediol and neopentyl glycol.

The polyol (Y) preferably includes the trihydric or higher polyol (d), and more preferably includes the trihydric or higher polyol (d) and the diol (e). Thus, the rosin-modified unsaturated polyester can exhibit higher surface hardness and water resistance after curing.

When the polyol (Y) includes the trihydric or higher polyol (d) and the diol (e), the content of the trihydric or higher polyol (d) in the polyol (Y) is preferably 40 mol% or more, more preferably 50 mol% or more, and more preferably 55 mol% or more. When the polyol (Y) includes the trihydric or higher polyol (d) and the diol (e), the content of the trihydric or higher polyol (d) in the polyol (Y) is preferably 70 mol% or less, and more preferably 65 mol% or less. A content of the trihydric or higher polyol (d) of 40 mol% or more allows for an increase in the amount of the rosins (a) incorporated into the molecule of the rosin-modified unsaturated polyester, and thus the rosin-modified unsaturated polyester can exhibit higher surface hardness and water resistance after curing. A content of the trihydric or higher polyol (d) of 70 mol% or less can reduce the amount of excess hydroxyl groups not subjected to esterification reaction, and such a reduction can lower methanol tolerance.

The content ratio of the polyol (Y) in the raw material compounds is preferably 10 parts by mass or more, and more preferably 15 parts by mass or more, relative to the total amount of 100 parts by mass of the carboxylic acids (X) and the polyol (Y). The content ratio of the polyol (Y) in the raw material compounds is preferably 60 parts by mass or less, and more preferably 35 parts by mass or less, relative to the total amount of 100 parts by mass of the carboxylic acids (X) and the polyol (Y). A content ratio of the polyol (Y) of 10 parts by mass or more allows for sufficient esterification of the carboxy groups possessed by the carboxylic acids (X), and can thereby lower the methanol tolerance of the rosin-modified unsaturated polyester. A content ratio of the polyol (Y) of 60 parts by mass or less can reduce the amount of the excess hydroxyl groups not subjected to the esterification reaction, and can, as a result, lower the methanol tolerance of the rosin-modified unsaturated polyester.

The molecular structure of the rosin-modified unsaturated polyester is not particularly limited. For example, when the polyol (Y) includes the trihydric or higher polyol (d) and the diol (e), the rosin-modified unsaturated polyester is preferably a polycondensation product obtained by esterifying the α,β-unsaturated dicarboxylic acids (b) and the diol (e) with an esterified product (I) that is a hydroxy group-containing esterified product of the rosins (a) and the trihydric or higher polyol (d). In such a rosin-modified unsaturated polyester, the esterification reaction of each raw material compound is allowed to proceed sufficiently, and so the amounts of the unreacted carboxy groups and hydroxyl groups contained in the rosin-modified unsaturated polyester can be reduced. Thus, the methanol tolerance of the rosin-modified unsaturated polyester can thereby be lowered. That is, the methanol tolerance of the rosin-modified unsaturated polyester at 25°C can be set to the preferable amount of 100 g or less.

When the carboxylic acids (X) further include the other carboxylic acids (c), the rosin-modified unsaturated polyester is preferably a polycondensation product obtained by esterifying the α,β-unsaturated dicarboxylic acids (b) and the diol (e) with an esterified product (I) that is a hydroxy group-containing esterified product of the rosins (a), the other carboxylic acids (c), and the trihydric or higher polyol (d). In such a rosin-modified unsaturated polyester, the esterification reaction of each raw material compound is allowed to proceed sufficiently, and so the methanol tolerance of the rosin-modified unsaturated polyester can be lowered.

In the raw material compounds, the ratio of the total number of moles of hydroxyl groups in the polyol (Y) to the total number of moles of carboxy groups in the carboxylic acids (X) [total number of moles of hydroxyl groups in the polyol (Y) / total number of moles of carboxy groups in the carboxylic acids (X)] is preferably 0.95 or more, and more preferably 1.00 or more. In the raw material compounds, the ratio of the total number of moles of hydroxyl groups in the polyol (Y) to the total number of moles of carboxy groups in the carboxylic acids (X) [total number of moles of hydroxyl groups in the polyol (Y) / total number of moles of carboxy groups in the carboxylic acids (X)] is preferably 1.30 or less, and more preferably 1.15 or less. Setting the above-mentioned ratio to be within the above-mentioned range allows the hydroxyl groups possessed by the polyol (Y) to be sufficiently esterified with the carboxy groups of the carboxylic acids (X), which include the rosins (a), and the degree of esterification can be increased as a result. Thus, the methanol tolerance of the rosin-modified unsaturated polyester can be easily adjusted to 100 g or less. As a result, the surface hardness and water resistance of the cured product that has been produced using the rosin-modified unsaturated polyester can be improved. In addition, this configuration can reduce the occurrence of azeotropy due to the dehydration of the polyol (Y) during the esterification reaction for producing the rosin-modified unsaturated polyester.

As described above, the carboxylic acids (X) include multiple types of carboxylic acids such as the rosins (a) and the α,β-unsaturated dicarboxylic acids (b). Therefore, the total number of moles of carboxy groups in the carboxylic acids (X) can be calculated as follows. First, for each of the carboxylic acids (X), the number of moles (M_{COOH}) of carboxy groups is calculated by multiplying the number of moles of the carboxylic acids (X) included in the raw material compounds by the number of carboxy groups contained in one molecule of the carboxylic acids (X). Next, the calculated number of moles (M_{COOH}) of carboxy groups for the respective carboxylic acids (X) are summed. The thus obtained value is defined as "the total number of moles of carboxy groups in the carboxylic acids (X)".

In "the total number of moles of carboxy groups in the carboxylic acids (X)", the number of moles (M_{COOH}) of carboxy groups of the rosins (a) is calculated as follows. First, the acid value of the rosins (A) included in the raw material compounds is measured, and the amount of carboxy groups per unit mass contained in the rosins (A) is calculated. Based on this amount of carboxy groups, the average molecular weight of the rosins (A) is determined. Then, the number of moles of carboxy groups (M_{COOH}) of the rosins (a) is calculated by using the obtained average molecular weight and the content of the rosins (A) included in the raw material compound.

The acid value of the rosins (A) can be measured in accordance with JIS K5601-2-1 (1999).

The total number of moles of hydroxyl groups in the polyol (Y) can be calculated as follows. The polyol (Y) may include multiple types of polyols such as the trihydric or higher polyol (d) and the diol (e). Therefore, for each polyol (Y), the number of moles (M_{OH}) of hydroxyl groups is first calculated by multiplying the number of moles of the polyol (Y) included in the raw material compounds by the number of hydroxyl groups contained in one molecule of that polyol (Y). Next, the calculated numbers of moles (M_{OH}) of hydroxyl groups for the respective polyols (Y) are summed. The thus obtained value is defined as "total number of moles of hydroxyl groups in the polyol (Y)".

The raw material compounds constituting the rosin-modified unsaturated polyester may further include a monohydric alcohol. The monohydric alcohol is a compound having one hydroxyl group in one molecule. Examples of the monohydric alcohol include methanol, ethanol, propanol, and isopropanol. The monohydric alcohols may be used singly, or two or more types thereof may be used in combination.

The weight-average molecular weight of the rosin-modified unsaturated polyester is preferably 3,000 or more, and more preferably 4,000 or more. The weight-average molecular weight of the rosin-modified unsaturated polyester is preferably 50,000 or less, and more preferably 20,000 or less. A weight-average molecular weight of the rosin-modified unsaturated polyester of 3,000 or more can improve the water resistance and surface hardness of a cured product that has been produced using the rosin-modified unsaturated polyester. A weight-average molecular weight of the rosin-modified unsaturated polyester of 50,000 or less suppresses gelation and an excessive increase in the molecular weight of the rosin-modified unsaturated polyester, which may lead to improving the solubility of the rosin-modified unsaturated polyester in a radically polymerizable monomer described later.

Setting the weight-average molecular weight of the rosin-modified unsaturated polyester to 20,000 or less allows for lowering of the heating temperature when dissolving the rosin-modified unsaturated polyester in a radically polymerizable monomer in the production of the rosin-modified unsaturated polyester composition. This configuration allows for the suitable use of a radically polymerizable monomer having a relatively low boiling point such as styrene.

The weight-average molecular weight of the rosin-modified unsaturated polyester refers to a value calculated as a polystyrene-equivalent value based on a molecular weight measured by gel permeation chromatography (GPC). For example, it can be measured under the following measurement conditions. The rosin-modified unsaturated polyester is dissolved in tetrahydrofuran to obtain a measurement sample in which the concentration of the rosin-modified unsaturated polyester is 0.5% by mass. Using this measurement sample, the weight-average molecular weight of the rosin-modified unsaturated polyester can be measured with a gel permeation chromatograph (GPC) equipped with a differential refractive index detector (RID) using the following measuring apparatus and conditions:
Measuring apparatus: "shodex GPC-101" manufactured by Showa Denko K. K. (currently, Resonac Holdings Corporation)
Column: "KF-802" + two "KF-806L" manufactured by Showa Denko K. K. (currently, Resonac Holdings Corporation)
Detector: shodex RI-71 (differential refractive index detector)
Data processing: "480IIXP",
Standard polystyrene ("S-0.5", "S-1.0", "S-1.2", "S-1.9", "S-2.9", "S-3.1", "S-4.4", "S-5.1", "S-7.2", "S-19.6", "S-49.2", "S-114", "S-257", "S-778", "S-1320", and "S-7450" manufactured by Showa Denko K. K. (currently, Resonac Holdings Corporation))
Column temperature: 40°C
Solvent: Tetrahydrofuran
Flow rate: 1.0 mL/min
Sample concentration: 0.5% by mass
Injection amount: 100 µm

### (Method for producing rosin-modified unsaturated polyester)

The rosin-modified unsaturated polyester can be produced by polycondensing the raw material compounds including the carboxylic acids (X) including the rosins (a) and the α,β-unsaturated dicarboxylic acids (b), and the polyol (Y). A rosin-modified unsaturated polyester is obtained by carrying out polycondensation (esterification reaction) of the carboxylic acids (X) with the polyol (Y) accompanied by dehydration.

The polycondensation of the raw material compounds can be performed by using a known method. For example, there is a method in which the raw material compounds are reacted by mixing and heating in the presence of a solvent, as necessary.

The solvent is not particularly limited, and examples thereof include organic solvents such as petroleum hydrocarbon solvents including hexane, mineral spirit, and the like; aromatic hydrocarbon solvents including benzene, toluene, xylene, and the like; ketone-based solvents including acetone, methyl ethyl ketone, methyl isobutyl ketone, diisobutyl ketone, cyclohexanone, and the like; ester-based solvents including methyl acetate, ethyl acetate, butyl acetate, γ-butyrolactone, propylene glycol monomethyl ether acetate, and the like; and aprotic polar solvents including N,N-dimethylformamide, N,N-dimethylacetamide, dimethyl sulfoxide, N-methylpyrrolidone, pyridine, and the like. The solvents may be used singly, or two or more types thereof may be used in combination. Note that the blending ratio of the solvent(s) is not particularly limited and may be appropriately set according to the purpose and application.

For example, heating the raw material compounds in the presence of a solvent (an azeotropic dehydrating agent such as xylene or toluene) capable of forming an azeotrope with water can induce the esterification reaction, and water produced by the reaction can be distilled out. The solvent may be removed as necessary after the completion of the reaction. Furthermore, for example, the esterification reaction may be induced by heating the raw material compounds in the absence of a solvent, and the resulting water may be distilled out by a known method.

The polycondensation of the raw material compounds is preferably performed in the presence of an esterification catalyst. The esterification catalyst is not particularly limited, and examples thereof include organic sulfonic acids such as benzenesulfonic acid, p-toluenesulfonic acid, p-dodecylbenzenesulfonic acid, methanesulfonic acid, and ethanesulfonic acid; mineral acids such as sulfuric acid and hydrochloric acid; metal catalysts such as tetrabutyl zirconate, tetraisopropyl titanate, tetraisobutyl titanate, aluminum oxide, titanium oxide, magnesium oxide, magnesium hydroxide, magnesium acetate, calcium oxide, calcium hydroxide, calcium acetate, zinc oxide, and zinc acetate; and trifluoromethyl sulfuric acid and trifluoromethyl acetic acid. The esterification catalysts may be used singly, or two or more types thereof may be used in combination. The addition ratio of the esterification catalyst is not particularly limited, and is appropriately set according to the purpose and application.

The polycondensation of the raw material compounds is preferably performed in an inert gas atmosphere under atmospheric pressure. In the polycondensation of the raw material compounds, the heating temperature of the raw material compounds is preferably 150 to 280°C, and preferably 200 to 250°C. The heating time is preferably 4 to 20 hours, and more preferably 6 to 15 hours.

In the polycondensation of the raw material compounds, the order of reacting or mixing the raw material compounds is not particularly limited. All of the raw material compounds may be mixed simultaneously for the polycondensation, or they may be mixed in an arbitrary order for the polycondensation. For example, when the carboxylic acids (X) include the rosins (a) and the α,β-unsaturated dicarboxylic acids (b), and when the alcohol (Y) includes the trihydric or higher polyol (d) and the diol (e), the raw material compounds may be polycondensed in an arbitrary order, but the polycondensation is preferably performed in the following order.

Specifically, the method for producing the rosin-modified unsaturated polyester preferably includes:
a first esterification step of obtaining a hydroxy group-containing esterified product (I) by heating the rosins (a) and the trihydric or higher polyol (d) at a heating temperature of 230°C or higher to carry out the esterification reaction; and
a second esterification step of obtaining the rosin-modified unsaturated polyester by heating, after the first esterification step, the esterified product (I), the α,β-unsaturated dicarboxylic acids (b) and the diol (e) at a heating temperature of 180°C or higher but lower than 230°C to carry out the esterification reaction.

In the above-mentioned method, after the esterification reaction of the rosins (a) and the trihydric or higher polyol (d) is performed in the first esterification step, the esterification reaction of the α,β-unsaturated dicarboxylic acids (b) is performed in the second esterification step. Even when the rosins (a) contain a resin acid having a conjugated double bond, this configuration reduces the addition of the α,β-unsaturated dicarboxylic acids (b) to the resin acid via a Diels-Alder reaction. As a result, the unsaturated bonds derived from the α,β-unsaturated dicarboxylic acids (b) can be sufficiently incorporated into the rosin-modified unsaturated polyester.

In the above-mentioned method, performing the esterification reaction of the rosins (a) and the trihydric or higher polyol (d) prior to the reaction of the α,β-unsaturated dicarboxylic acids (b) and the diol (e) in the first esterification step allows the heating temperature during the esterification reaction to be increased. This increased temperature enables the esterification reaction of the rosins (a) and the trihydric or higher polyol (d) to proceed sufficiently, and can thus lower the methanol tolerance of the finally obtained rosin-modified unsaturated polyester even when the content ratio of the rosins (a) is high.

The heating temperature in the first esterification step is preferably 230°C or higher, and more preferably 240°C or higher. The heating temperature in the first esterification step is preferably 280°C or lower, and more preferably 250°C or lower.

When the carboxylic acids (X) further include other carboxylic acids (c), the esterification reaction of the other carboxylic acids (c) is preferably performed in the first esterification step. That is, in the first esterification step, the rosins (a) and the other carboxylic acids (c) are preferably subjected to the esterification reaction with the trihydric or higher polyol (d).

In the first esterification step, the rosins (a) and, as necessary, the other carboxylic acids (c) are subjected to the esterification reaction with an excess amount of the trihydric or higher polyol (d) to obtain the hydroxy group-containing esterified product (I). In order to allow the esterification reaction to proceed sufficiently, the acid value of the hydroxy group-containing esterified product (I) obtained in the first esterification step is preferably 10 mgKOH/g or less.

In the second esterification step, the rosin-modified unsaturated polyester is obtained by further esterifying the esterified product (I), which has been obtained in the first esterification step with the α,β-unsaturated dicarboxylic acids (b) and the diol (e) at a relatively low heating temperature.

The heating temperature in the second esterification step is preferably 180°C or higher, more preferably 190°C or higher, and more preferably 200°C or higher. The heating temperature in the second esterification step is preferably lower than 230°C, more preferably 220°C or lower, and more preferably 210°C or lower. Carrying out the esterification reaction at a relatively low heating temperature in this manner allows the esterification reaction of the hydroxyl-group-containing esterified product (I) obtained in the first esterification step with the α,β-unsaturated dicarboxylic acids (b) and the diol (e) to proceed sufficiently. As a result, the methanol tolerance of the finally obtained rosin-modified unsaturated polyester can be lowered. Furthermore, even when unmodified rosin is used as the rosins (a), setting the reaction temperature of the second esterification step to be within the above-mentioned range allows the unsaturated bonds derived from the α,β-unsaturated dicarboxylic acids (b) to remain in the rosin-modified unsaturated polyester with a high retention rate, which may enable the finally obtained rosin-modified unsaturated polyester to more reliably copolymerize with the radically polymerizable monomer.

In the second esterification step, the esterification reaction is preferably performed by cooling the esterified product (I) obtained in the first esterification step to 180°C or lower, particularly to 150 to 180°C, and then heating the esterified product (I) with the α,β-unsaturated dicarboxylic acids (b) and the diol (e) at the above-mentioned heating temperature.

In the second esterification step, the esterification reaction of the esterified product (I), the α,β-unsaturated dicarboxylic acids (b), and the diol (e) is preferably performed in the presence of a polymerization inhibitor.

The rosins (a) may contain a rosin metal salt as an inevitable impurity. A metal atom contained in such a rosin metal salt can act as a catalyst for the esterification reaction in the first esterification step. On the other hand, in the second esterification step, the above-mentioned metal atom may act as a polymerization catalyst that promotes the polymerization of the α,β-unsaturated dicarboxylic acids (b) with each other. As a result, the rosin-modified unsaturated polyester could increase in molecular weight and undergo gelation. In such a case, use of a polymerization inhibitor can suppress the polymerization of the α,β-unsaturated dicarboxylic acids (b) with each other in the second esterification step, and can thus reduce the gelation of the rosin-modified unsaturated polyester.

As the metal atom of the rosin metal salt, for example, at least one of an iron atom, a copper atom, a zinc atom, an aluminum atom, and a magnesium atom is mentioned. The content of the rosin metal salt in the rosins (a) is trace.

Examples of the polymerization inhibitor include a phenolic polymerization inhibitor such as (alkyl)phenol, p-methoxyphenol, o-isopropylphenol, catechol, resorcin, t-butylcatechol, pyrogallol, dibutylcresol, and guaiacol; a nitroso-type polymerization inhibitor such as nitrosobenzene, aluminum N-nitrosophenylhydroxylamine, tri-p-nitrophenylmethyl, picric acid, cupferron, butyraldoxime, methyl ethyl ketoxime, and cyclohexanone oxime; a quinone-based polymerization inhibitor such as hydroquinone, t-butylhydroquinone (TBHQ), p-benzoquinone, and 2,5-di-tert-butyl-p-benzoquinone; and a piperidine-based polymerization inhibitor such as phenothiazine. Among these, a nitroso-based polymerization inhibitor and a quinone-based polymerization inhibitor are preferable, and aluminum N-nitrosophenylhydroxylamine and t-butylhydroquinone are more preferable. The polymerization inhibitors may be used singly, or two or more types thereof may be used in combination.

The blending amount of the polymerization inhibitor is preferably 0.001 to 5 parts by mass, and more preferably 0.01 to 1 part by mass, relative to the total amount of 100 parts by mass of the carboxylic acids (X) and the polyol (Y). Setting the blending amount of the polymerization inhibitor to be within the above-mentioned range can sufficiently suppress the polymerization of the α,β-unsaturated dicarboxylic acids (b) with each other in the second esterification step.

The acid value of the rosin-modified unsaturated polyester obtained in the second esterification step is preferably 30 mgKOH/g or less, and preferably 20 mgKOH/g or less. This configuration allows the esterification reaction in the second esterification step to sufficiently proceed, and can thus lower the methanol tolerance of the finally obtained rosin-modified unsaturated polyester.

The acid value of the esterified product (I) obtained in the first step and the acid value of the rosin-modified unsaturated polyester obtained in the second esterification step are measured in accordance with JIS K5601-2-1 (1999). The hydroxyl value of the rosin-modified unsaturated polyester can be measured in accordance with JIS K 0070 (1992).

Use of the polymerization inhibitor in the second esterification step results in the rosin-modified unsaturated polyester, obtained by the above-described method of the present invention, in the form of a mixture with the polymerization inhibitor. That is, the use of the polymerization inhibitor in the second esterification step yields a composition including the rosin-modified unsaturated polyester and the polymerization inhibitor. Then, by adding a radically polymerizable monomer, which will be described later, and by adding optional components including a polymerization initiator, a curing accelerator, and the like as necessary to the composition, the rosin-modified unsaturated polyester composition can be obtained. If necessary, a polymerization inhibitor may be further added to the rosin-modified unsaturated polyester composition.

### <Rosin-modified unsaturated polyester composition>

The rosin-modified unsaturated polyester described above is suitably used as a rosin-modified unsaturated polyester composition including the same. The rosin-modified unsaturated polyester composition includes the rosin-modified unsaturated polyester and a radically polymerizable monomer. Use of the rosin-modified unsaturated polyester of the present invention described above allows the rosin-modified unsaturated polyester composition to form a cured product excellent in terms of surface hardness and water resistance. The cured product is suitably used as a molded article that has been molded into a desired form.

The rosin-modified unsaturated polyester contains unsaturated bonds in the molecule. Examples of the unsaturated bonds include a carbon-carbon double bond and a carbon-carbon triple bond. Among these, a carbon-carbon double bond is preferable.

Examples of the radically polymerizable monomer include a vinyl compound such as styrene, chlorostyrene, dichlorostyrene, t-butylstyrene, vinyl naphthalene, ethyl vinyl ether, methyl vinyl ketone, methyl acrylate, methyl methacrylate, ethyl acrylate, ethyl methacrylate, acrylonitrile, and methacrylonitrile, an allyl compound such as diallyl phthalate, diallyl terephthalate, diallyl succinate, and triallyl cyanurate, and oligomers thereof. Styrene, methylstyrene, and diallyl phthalate are preferable, and styrene and methylstyrene are more preferable. These radically polymerizable monomers can be easily copolymerized with the rosin-modified unsaturated polyester and such copolymerization allows the rosin-modified unsaturated polyester composition to be cured more reliably. As a result, the surface hardness and water resistance of the rosin-modified unsaturated polyester composition after curing can be further improved. The radically polymerizable monomers may be used singly, or two or more types thereof may be used in combination.

The content of the radically polymerizable monomer may be appropriately adjusted according to the viscosity and applications of the rosin-modified unsaturated polyester composition. In the rosin-modified unsaturated polyester composition, the content of the radically polymerizable monomer is preferably 10 to 200 parts by mass, and more preferably 30 to 150 parts by mass, relative to 100 parts by mass of the rosin-modified unsaturated polyester.

The viscosity of the rosin-modified unsaturated polyester composition at 25°C is preferably 10 to 10,000 mPa·s, and more preferably 50 to 5000 mPa·s.

The viscosity of the rosin-modified unsaturated polyester composition at 25°C is the value measured using a rheometer (for example, product name "HAAKE RheoStress 600" manufactured by Thermo Haake) under the conditions of a temperature of 25°C and a frequency of 1.0 Hz.

The rosin-modified unsaturated polyester composition preferably includes a polymerization initiator. A thermal polymerization initiator is preferably used as the polymerization initiator. Examples thereof include an organic peroxide such as methyl ethyl ketone peroxide, acetyl acetone peroxide, t-butyl peroxybenzoate, benzoyl peroxide, dicumyl peroxide, and cumene hydroperoxide. In the rosin-modified unsaturated polyester composition, the content ratio of the polymerization initiator is preferably 0.1 to 5 parts by mass relative to the total amount of 100 parts by mass of the rosin-modified unsaturated polyester and the radically polymerizable monomer.

The rosin-modified unsaturated polyester composition preferably includes a curing accelerator. Examples of the curing accelerator include cobalt naphthenate, cobalt octoate, N,N-dimethylaniline, N,N-diethylaniline, N,N-dimethyl-p-toluidine, acetylacetone, and an acetoacetic acid ethyl ester. In the rosin-modified unsaturated polyester composition, the content ratio of the curing accelerator is preferably 0.05 to 5 parts by mass relative to the total amount of 100 parts by mass of the rosin-modified unsaturated polyester and the radically polymerizable monomer.

The rosin-modified unsaturated polyester composition preferably includes a polymerization inhibitor. The polymerization inhibitor can reduce the occurrence of unnecessary polymerization of the rosin-modified unsaturated polyester and the radically polymerizable monomer during storage of the rosin-modified unsaturated polyester composition, and can thus improve storage stability.

Examples of the polymerization inhibitor include those similar to the polymerization inhibitors used in the second esterification step of the above-described method of the present invention. The content ratio of the polymerization inhibitor is preferably 0.05 to 5 parts by mass relative to the total amount of 100 parts by mass of the rosin-modified unsaturated polyester and the radically polymerizable monomer.

The method for producing the rosin-modified unsaturated polyester composition is not particularly limited. For example, the rosin-modified unsaturated polyester composition can be obtained by dissolving the rosin-modified unsaturated polyester in the radically polymerizable monomer. If necessary, a polymerization initiator, a curing accelerator, and a polymerization inhibitor may be added thereto.

The rosin-modified unsaturated polyester composition is cured by copolymerizing the rosin-modified unsaturated polyester with the radically polymerizable monomer. The temperature of polymerization between the rosin-modified unsaturated polyester and the radically polymerizable monomer may be adjusted according to the type of the polymerization initiator, and is preferably 20 to 150°C, and more preferably 25 to 120°C. The polymerization time is preferably 2 to 30 hours, and more preferably 3 to 10 hours. The polymerization reaction is preferably performed in an inert gas atmosphere such as nitrogen gas.

Use of the rosin-modified unsaturated polyester allows the rosin-modified unsaturated polyester composition to form a cured product (molded article) having high surface hardness. Such a cured product has excellent scratch resistance and can maintain a beautiful appearance for a long period of time. When the rosin-modified unsaturated polyester composition includes a thermal polymerization initiator, the rosin-modified unsaturated polyester composition can be sufficiently cured to its core. Therefore, the cured product exhibits more excellent scratch resistance.

Furthermore, use of the rosin-modified unsaturated polyester allows the rosin-modified unsaturated polyester composition to form a cured product (molded article) having high water resistance. Such a cured product can suppress the deterioration of mechanical strength caused by contact with water. Therefore, even when the cured product comes into contact with water such as rainwater or moisture for a long period of time, the cured product can maintain high mechanical strength.

As described above, the rosin-modified unsaturated polyester composition can form a cured product having both high surface hardness and high water resistance. Therefore, the rosin-modified unsaturated polyester composition can be used for various applications. The applications of the rosin-modified unsaturated polyester composition are not particularly limited. For example, the rosin-modified unsaturated polyester composition can be used as a molded article cured into a desired shape.

The rosin-modified unsaturated polyester composition is also suitably used, for example, as a binder for bonding and integrating adherends together. This configuration enables the provision and formation of a molded article in which the adherends are bonded and integrated together by the cured product of the rosin-modified unsaturated polyester composition. Even when the rosin-modified unsaturated polyester composition is used in such a form, a molded article excellent in terms of surface hardness and water resistance can be obtained. Examples of the adherends include particles such as inorganic particles and synthetic resin particles, and fibers such as reinforcing fibers.

The rosin-modified unsaturated polyester composition can be used as a fiber-reinforced plastic (FRP).

The fiber-reinforced plastic includes a cured product of the rosin-modified unsaturated polyester composition and reinforcing fibers. The cured product of the rosin-modified unsaturated polyester composition can integrate the reinforcing fibers as a binder. That is, in the fiber-reinforced plastic, the cured product of the rosin-modified unsaturated polyester composition can function as a binder (sizing agent) for bonding the fibers of the reinforcing fibers to each other. Use of the cured product of the rosin-modified unsaturated polyester composition in this manner can provide a fiber-reinforced plastic having high surface hardness and high water resistance.

Examples of the reinforcing fibers include inorganic fibers such as glass fibers, carbon fibers, metal fibers, and ceramic fibers; organic fibers such as polyvinyl alcohol-based fibers, polyester-based fibers, polyamide-based fibers, fluororesin-based fibers, and phenol-based fibers; and natural fibers such as hemp and kenaf. Inorganic fibers are preferable, carbon fibers and glass fibers are preferable, and glass fibers are more preferable. The reinforcing fibers may be used singly, or two or more types thereof may be used in combination. The reinforcing fiber is preferably used as a reinforcing fiber base material processed into a desired shape.

Known methods are used as the method for producing the fiber-reinforced plastic. For example, the fiber-reinforced plastic can be obtained by impregnating reinforcing fibers with the rosin-modified unsaturated polyester composition to obtain a prepreg, and then curing the rosin-modified unsaturated polyester composition. The applications of the fiber-reinforced plastic are not particularly limited, and examples thereof include ship hulls, bathtubs, construction materials, and industrial equipment.

### Examples

The present invention will be described more specifically with reference to Examples, but the present invention is not limited thereto.

### [Examples 1 to 5, Comparative Examples 1 and 2]

### (Synthesis of rosin-modified unsaturated polyester)

In a four-necked flask equipped with a thermometer, a stirrer, an inert gas inlet, and a reflux condenser, disproportionated rosin (trade name "G-100F" manufactured by Harima Chemicals Group, Inc.), adipic acid, tetrahydrophthalic anhydride, isophthalic acid, stearic acid, benzoic acid, glycerin, and pentaerythritol were charged as raw material compounds in the respective blending amounts shown in Table 1, and heated at 250°C to subject the raw material compounds to a dehydration condensation reaction. As a result, a hydroxy group-containing esterified product (I) was formed (first esterification step). The dehydration condensation reaction was carried out until the acid value of the esterified product (I) finally obtained became 10 mgKOH/g or less.

Next, the interior of the four-necked flask was cooled to 180°C. Into the four-necked flask, 1,3-propanediol, 1,6-hexanediol, neopentyl glycol, and maleic anhydride as raw material compounds, and aluminum N-nitrosophenylhydroxylamine (trade name "Q 1305" manufactured by FUJIFILM Wako Pure Chemical Corporation) and t-butylhydroquinone (TBHQ) as polymerization inhibitors were charged in the respective blending amounts shown in Table 1, and heated at 200°C to subject the esterified product (I) and the raw material compounds to a dehydration condensation reaction. As a result, a rosin-modified unsaturated polyester was formed (second esterification step). Thus, a mixture containing the rosin-modified unsaturated polyester and the polymerization inhibitors was obtained. The dehydration condensation reaction was carried out until the acid value of the rosin-modified unsaturated polyester finally obtained became 20 mgKOH/g or less.

### (Production of rosin-modified unsaturated polyester composition)

A rosin-modified unsaturated polyester composition was obtained by mixing 60.06 parts by mass of the above-mentioned mixture (60 parts by mass of the rosin-modified unsaturated polyester and 0.06 parts by mass of the polymerization inhibitors) with 40 parts by mass of 4-methylstyrene, 1 part by mass of cobalt naphthenate, and 2 parts by mass of a solution containing 55% by mass of methyl ethyl ketone peroxide (MEKP). In the rosin-modified unsaturated polyester composition, the rosin-modified unsaturated polyester was dissolved in 4-methylstyrene.

Note that the disproportionated rosin used in the first esterification step contained a trace amount of a rosin metal salt as an inevitable impurity. The metal atom contained in the rosin metal salt was at least one of an iron atom, a copper atom, a zinc atom, an aluminum atom, and a magnesium atom.

The ratio of the total number of moles of hydroxyl groups in the polyol (Y) to the total number of moles of carboxy groups in the carboxylic acids (X) in all the raw material compounds used in the first and second esterification steps [total number of moles of hydroxyl groups in the polyol (Y) / total number of moles of carboxy groups in the carboxylic acids (X)] is shown in the column of "Ratio [total number of moles of hydroxyl groups / total number of moles of carboxy groups]" in Table 1.

### [Evaluation]

The rosin-modified unsaturated polyester and the rosin-modified unsaturated polyester composition obtained in each of Examples and Comparative Examples were evaluated as follows.

The methanol tolerance at 25°C, softening point, acid value, and hydroxyl value of the rosin-modified unsaturated polyester were measured according to the procedures described above, respectively. These results are shown in Table 1.

### (Ease of synthesis)

The weight-average molecular weight of the rosin-modified unsaturated polyester was measured according to the procedure described above and evaluated based on the following criteria. The evaluation results are shown in Table 1.

### <Evaluation criteria>

A: The weight-average molecular weight of the rosin-modified unsaturated polyester was 20,000 or less.
B: The weight-average molecular weight of the rosin-modified unsaturated polyester was more than 20,000 and 50,000 or less, which is therefore considered to pose no problem in practical use.

X: The weight-average molecular weight of the rosin-modified unsaturated polyester was more than 50,000.

The weight-average molecular weight of the rosin-modified unsaturated polyester is preferably relatively low in consideration of solubility in radically polymerizable monomers and the like, and is, for example, preferably 50,000 or less, and particularly preferably 20,000 or less. On the other hand, it is sometimes difficult to adjust the weight-average molecular weight during synthesis of the rosin-modified unsaturated polyester. Specifically, although the molecular weight of the reactants of the raw material compounds gradually increases with the start of the reaction of the raw material compounds, the molecular weight of the reactants of the raw material compounds considerably increases at the final stage of the reaction of the raw material compounds. The reaction between these reactants causes a rapid increase in molecular weight and gelation, which may make it difficult to obtain a rosin-modified unsaturated polyester having a relatively low weight-average molecular weight. However, the method of the present invention can reduce the occurrence of the above-mentioned rapid increase in molecular weight and gelation, and the rosin-modified unsaturated polyester having a relatively low weight-average molecular weight can be easily produced. Therefore, even when a large amount of the rosin-modified unsaturated polyester is produced in a factory or the like, the method of the present invention eliminates the need for strict control of reaction conditions such as reaction time of the raw material compounds, which may lead to reduce the burden of such control of the reaction conditions. Thus, the rosin-modified unsaturated polyester having a relatively low weight-average molecular weight can be produced with good reproducibility.

### (Surface hardness)

The rosin-modified unsaturated polyester composition was poured into a cylindrical plastic container having a diameter of 65 mm, left at room temperature under a nitrogen atmosphere for 3 hours, and then further left at 80°C under a nitrogen atmosphere for 2 hours to be cured. Thus, a cured product (thickness: 3 mm) of the rosin-modified unsaturated polyester composition was obtained.

The surface hardness of the above-mentioned cured product was evaluated in accordance with ASTM D4366 (2014) using a pendulum hardness tester (trade name: "Pendulum Hardness tester" manufactured by BYK). Specifically, when a pendulum was swung with a metal ball (diameter: 5 nm) served as a fulcrum in contact with the cured product, the time for the amplitude of the pendulum to decay from 6° to 3° was measured, and the decay time was evaluated according to the following evaluation criteria. The evaluation results are shown in Table 1. The longer the decay time, the higher the surface hardness of the cured product. A score of 3 or more in the following evaluation criteria is preferable, which indicates that the cured product is at a level acceptable for practical use.

### <Evaluation criteria>

5: The decay time was 120 seconds or longer.
4: The decay time was 100 seconds or longer and shorter than 120 seconds.
3: The decay time was 80 seconds or longer and shorter than 100 seconds.
2: The decay time was 60 seconds or longer and shorter than 80 seconds.
1: The decay time was shorter than 60 seconds.

### (Water resistance)

A cured product (thickness: 3 mm) of the rosin-modified unsaturated polyester composition was obtained in the same manner as the method described above for the evaluation of surface hardness. The cured product was immersed in ion-exchanged water at 50°C for one month. The mass change rate of the cured product before and after immersion was calculated based on the following equation and evaluated according to the following criteria. The evaluation results are shown in Table 1. A score of 3 or more in the following evaluation criteria is preferable, which indicates that the cured product is at a level acceptable for practical use.

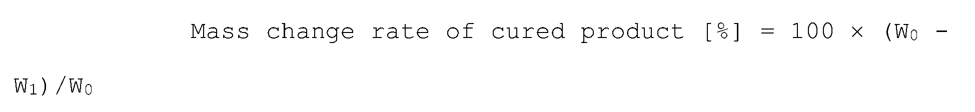

Mass change rate of cured product [%] = 100 × (W0 - W1)/W0 (In the formula, W₀ is the mass [g] of the cured product before immersion, and W₁ is the mass [g] of the cured product after immersion.)

### <Evaluation criteria>

5: The mass change rate of the cured product was 0.2% or less.
4: The mass change rate of the cured product was greater than 0.2% and 0.4% or less.
3: The mass change rate of the cured product was greater than 0.4% and 0.6% or less.
2: The mass change rate of the cured product was greater than 0.6% and 0.8% or less.
1: The mass change rate of the cured product was greater than 0.8%.

**[Table 1]**

| | | | | Example | | | | | Comparative Example | |
|---|---|---|---|---|---|---|---|---|---|---|
| | | | | 1 | 2 | 3 | 4 | 5 | 1 | 2 |
| Blending Amount [part(s) by mass] | Carboxylic Acids (X) | Rosins (a) | Disproportionated Rosin | 31 | 46.6 | 47.2 | 47.2 | 58 | 32.9 | 0 |
| | | α,β-Unsaturated Dicarboxylic Acids (b) | Maleic Anhydride | 18.6 | 17 | 17.9 | 17.9 | 13.4 | 21.4 | 18.6 |
| | | Othert Carboxylic Acids (c) | Adipic Acid | 10 | 0 | 0 | 0 | 0 | 0 | 0 |
| | | | Tetrahydrophthalic Anhydride | 0 | 4.2 | 5 | 5 | 0 | 11.9 | 0 |
| | | | Isophthalic Acid | 0 | 0 | 0 | 0 | 0 | 0 | 4 |
| | | | Stearic Acid | 5 | 0 | 0 | 0 | 0 | 0 | 52.9 |
| | | | Benzoic Acid | 5 | 4.2 | 5 | 5 | 8.9 | 0 | 0 |
| | Polyol (Y) | Polyol (d) | Glycerin | 13.4 | 14 | 14 | 14 | 3.4 | 11.8 | 2.7 |
| | | | Pentaerythritol | 0 | 0 | 0 | 0 | 9.6 | 0 | 11.6 |
| | | Diol (e)) | 1,3-Propanediol | 0 | 14 | 10.9 | 10.9 | 0 | 22 | 0 |
| | | | 1,6-Hexanediol | 17 | 0 | 0 | 0 | 0 | 0 | 0 |
| | | | Neopentyl Glycol | 0 | 0 | 0 | 0 | 6.7 | 0 | 10.2 |
| | Polymerization Inhibitor | | TBHQ | 0.05 | 0.05 | 0.05 | 0 | 0.05 | 0.05 | 0.05 |
| | | | Q1305 | 0.05 | 0.05 | 0.05 | 0 | 0.05 | 0.05 | 0.05 |
| Ratio [Total Number of Moles of Hydroxyl Groups / Total Number of Moles of Carboxy Groups] | | | | 1.09 | 1.02 | 1.22 | 1.22 | 1.01 | 1.40 | 1.02 |
| Content of Diol (e) in Alcohol (Y) [mol%] | | | | 49.7 | 54.8 | 48.5 | 48.5 | 37.5 | 69.3 | 46.1 |
| Content of Polyol (d) in Alcohol (Y) [mol%] | | | | 50.3 | 45.2 | 51.5 | 51.5 | 62.5 | 30.7 | 53.9 |
| Rosin-Modified Unsaturated Polyester | | | Methanol Tolerance [g] | 72 | 70 | 71 | 54 | 35 | 105 | 30 |
| | | | Softening Point [°C] | 58 | 80 | 82 | 89 | 111 | 63 | 60 |
| | | | Acid Value [mgKOH/g] | 11 | 17 | 18 | 20 | 19 | 19 | 17 |
| | | | Hydroxyl Value [mgKOH/g] | 17 | 17 | 23 | 29 | 18 | 35 | 19 |
| Evaluation | Ease of Synthesis | | | A | A | A | B | A | A | A |
| | Surface Hardness | | | 3 | 4 | 5 | 5 | 5 | 2 | 1 |
| | Water Resistance | | | 4 | 3 | 4 | 5 | 5 | 2 | 2 |

### Industrial Applicability

The rosin-modified unsaturated polyester of the present invention and the rosin-modified unsaturated polyester composition including the same can exhibit high surface hardness and high water resistance after curing. Therefore, such a rosin-modified unsaturated polyester composition is suitably used for a molded article such as a fiber-reinforced plastic or the like.

### (Cross-reference to related application)

The present application claims the priority under Japanese Patent Application No. 2024-11972, filed on January 30, 2024, the disclosure of which is herein incorporated in its entirety by reference.

## Claims

1. A rosin-modified unsaturated polyester, wherein a methanol tolerance at 25°C is 100 g or less.

2. The rosin-modified unsaturated polyester according to claim 1, wherein a softening point is 60°C or higher.

3. The rosin-modified unsaturated polyester according to claim 1, which is a polycondensation product of raw material compounds including carboxylic acids (X) including rosins (a) and α,β-unsaturated dicarboxylic acids (b), and a polyol (Y).

4. The rosin-modified unsaturated polyester according to claim 3, wherein the rosins (a) include at least one of disproportionated rosin and hydrogenated rosin.

5. The rosin-modified unsaturated polyester according to claim 3, wherein the polyol (Y) includes a trihydric or higher polyol (d).

6. A rosin-modified unsaturated polyester composition comprising the rosin-modified unsaturated polyester according to claim 1 and a polymerization inhibitor.

7. A rosin-modified unsaturated polyester composition comprising the rosin-modified unsaturated polyester according to claim 1 and a radically polymerizable monomer.

8. The rosin-modified unsaturated polyester composition according to claim 7, wherein the radically polymerizable monomer includes at least one of styrene and methylstyrene.

9. A molded article comprising a cured product of the rosin-modified unsaturated polyester composition according to claim 8.
